Europäisches Patentamt

European Patent Office

Office européen des brevets

(11) Numéro de publication: **0 265 309**
A1

# (12) DEMANDE DE BREVET EUROPEEN

(21) Numéro de dépôt: 87402100.9

(22) Date de dépôt: 21.09.87

(51) Int. Cl.4: **B 06 B 1/02**
G 01 M 7/00, G 10 K 11/04

(30) Priorité: 26.09.86 FR 8613482

(43) Date de publication de la demande:
27.04.88 Bulletin 88/17

(84) Etats contractants désignés:
AT CH DE ES FR GB IT LI NL SE

(71) Demandeur: **COMPAGNIE D'ELECTRONIQUE ET DE PIEZO-ELECTRICITE - C.E.P.E.**
**44, rue de la Glacière**
**F-95100 Argenteuil (FR)**

(72) Inventeur: **Chaumeron, Michel**
**THOMSON-CSF SCPI 19, avenue de Messine**
**F-75008 Paris (FR)**

(74) Mandataire: **Ruellan-Lemonnier, Brigitte et al**
**THOMSON-CSF SCPI 19, avenue de Messine**
**F-75008 Paris (FR)**

(54) Dispositif de commande de vibrateur.

(57) L'invention concerne un dispositif de commande d'un vibrateur comprenant une boucle d'asservissement qui comporte des moyens de mesure (5) de contraintes vibratoires de l'ensemble en vibration, un générateur (8) de signal commandé par un signal de consigne pour obtenir un gabarit prédéterminé, ce générateur étant relié aux moyens de mesure, un amplificateur relié au générateur et au vibrateur dans lequel on utilise des moyens de filtrage (2) dont la fréquence de coupure se situe dans une plage de fréquences pour lesquelles le niveau demandé baisse ou est petit par rapport aux caractéristiques maximales du vibrateur et dans lequel la sortie du générateur (8) est asservi par le signal de sortie des moyens de mesure de contrainte (5).

Application aux essais en vibration de circuits électroniques.

FIG_1

**Description**

DISPOSITIF DE COMMANDE DE VIBRATEUR

La présente invention concerne les dispositifs de commande de vibrateurs qui sont utilisés par exemple pour effectuer des essais de vibrations sur certains circuits et notammant sur des circuits électroniques.

Pour connaître la réponse de certains circuits et notamment celle des circuits électroniques, soumis à des contraintes vibratoires, il est nécessaire d'effectuer des essais sur ces circuits. Pour effectuer ces essais on utilise des vibrateurs dont la commande est adaptée aux vibrations que l'on désire imposer au circuit.

Il s'agit donc parfois d'effectuer des essais de vibrations en connaissant la gamme des amplitudes et des fréquences que doivent avoir les vibrations. Cependant, de plus en plus, il est demandé que la gamme des amplitudes s'étende, si bien qu'il s'avère difficile pour les moyens de vibration actuels de répondre à ce besoin. A titre d'exemple la dynamique demandée jusqu'à présent va de 30 dB à 40 dB, alors que maintenant la dynamique demandée est de 60 dB et plus.

Il s'agit également parfois d'effectuer des essais dans le but de simuler une suspension, sans disposer réellement de cette suspension. Dans ce cas, on est encore contraint de simuler des vibrations ayant une grande dynamique sur une grande gamme de fréquences. A titre d'exemple les simulations en fréquence doivent porter sur des fréquences supérieures à 1500 Hz et pouvant atteindre 3000 à 5000 Hz. Le niveau demandé pour ces fréquences étant faible, il arrive que des vibrations parasites à ces fréquences soient de niveaux supérieurs, dues par exemple à des résonances des éléments constituant le vibrateur ou son refroidissement, occultent les résultats des essais.

On est donc contraint de faire fonctionner les vibrateurs dans leurs limites sans toutefois pouvoir atteindre les niveaux demandés. Il est par conséquent difficile d'obtenir des vibrations ayant une grande dynamique avec les vibrateurs actuels. Il est également difficile d'obtenir des résultats d'essais significatifs dans une large gamme de fréquence car des fréquences de résonance de l'appareillage constituant le vibrateur ou son refroidissement peuvent occulter les résultats d'essais.

La présente invention permet de remédier à ces inconvénients en proposant un dispositif de commande de vibrateur qui comprend un filtre amortisseur pour les hautes fréquences et dont le signal de sortie est utilisé pour asservir le niveau de sortie du générateur qui commande l'amplificateur de puissance relié au vibrateur.

La présent invention a donc pour objet un dispositif de commande d'un vibrateur comprenant une boucle d'asservissement qui comporte des moyens de mesure de contraintes vibratoires de l'ensemble en vibration, un générateur de signal commandé par un signal de consigne pour obtenir un gabarit prédéterminé, ce générateur étant relié aux moyens de mesure, un amplificateur relié au générateur et au vibrateur caractérisé en ce qu'il comporte des moyens de filtrage dont la fréquence de coupure se situe dans une plage de fréquences pour lesquelles le niveau demandé baisse ou est petit par rapport aux caractéristiques maximales du vibrateur et en ce que le niveau de sortie du générateur est asservi par le signal de sortie des moyens de mesure de l'accélération.

Dans la définition de la présente invention, on précisera pour l'homme de l'art les points ci-après :
- par moyens de mesure de contraintes vibratoires, on entend tout dispositif apte à mesurer soit l'accélération, soit la vitesse, soit les déplacements,
- par ensemble en vibration, on entend le vibrateur et tout dispositif placé sur le vibrateur, notamment le support qui contient les circuits électroniques en essais.

D'autres particularités et avantages de la présente invention apparaîtront clairement à la lecture de la description suivante présentée à titre d'exemple non limitatif et faite en regard des figures du dessin annexé qui représentent :
    - figure 1, un schéma général du dispositif selon l'invention,
    - figure 2, un premier mode de réalisation du filtre selon la figure 1,
    - figure 3, un deuxième mode de réalisation du filtre selon la figure 1,
    - figure 4, un troisième mode de réalisation du filtre selon la figure 1.

Pour effectuer des essais de vibrations sur un circuit et notamment pour tester la réponse de circuits électroniques il est usuel de placer ces circuits sur un support qui est fixé directement sur le vibrateur de manière à ce que le vibrateur communique les vibrations au support sans prendre le risque qu'il y ait des amortissements parasites entre le vibrateur et le circuit d'essai.

Une boucle d'asservissement qui comprend un générateur suivi d'un amplificateur de puissance, permet de réguler par comparaison avec la valeur de consigne, l'amplitude du signal de commande du vibrateur à partir du signal qui est mesuré par un accéléromètre placé sur le support.

Avec un tel dispositif de commande lorsque l'on désire avoir une grande dynamique sur une large gamme de fréquences, cette dynamique est demandée aux éléments de la boucle : générateur, amplificateur de puissance, vibrateur. Or avec les vibrateurs dont on dispose il est difficile d'obtenir des dynamiques pratiques au-delà de 30 à 40 dB.

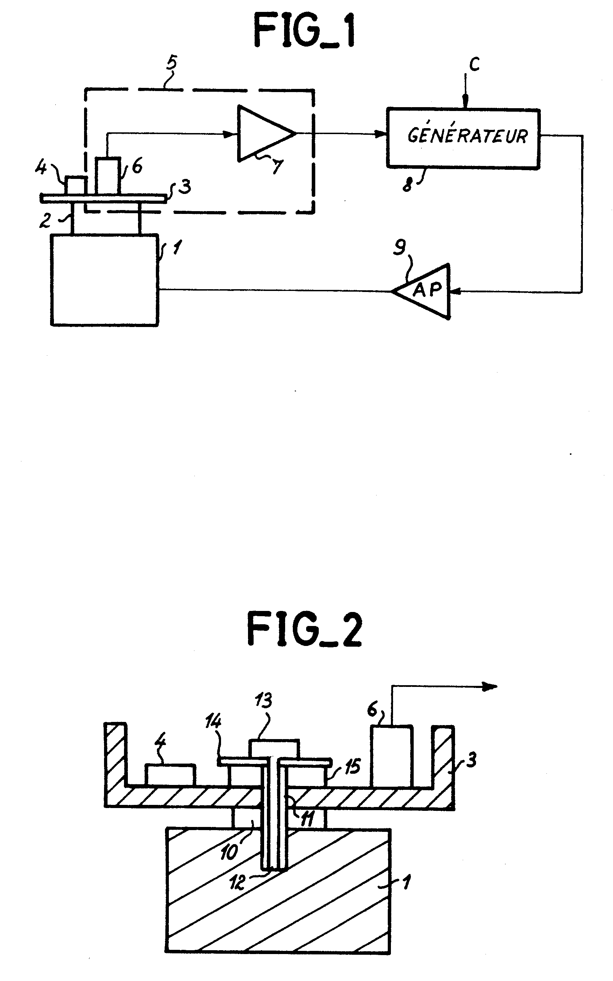

Le dispositif selon l'invention et qui est représenté sur la figure 1 permet d'une part d'obtenir une grande dynamique, de l'ordre de 60 dB et d'autre part de supprimer les fréquences de résonances et les vibrations dues au refroidissement du vibrateur (bruit) qui deviennent gênantes lorsqu'on effectue des essais ans une large gamme de fréquences.

Le dispositif comporte un vibrateur 1 sur lequel est placé un filtre amortisseur 2. Un support 3 est placé sur le filtre 2. Les circuits 4 à tester sont solidaires du support 3. Des moyens de mesure des contraintes vibratoires 5 sont reliés au support 3. Ces moyens comportent selon cet exemple particulier un accéléromètre 6 qui délivre un signal représentant des pico Colomb/g (g étant l'accélération terrestre). Ces moyens 5 comportent également un amplificateur de charge 7 qui permet d'amplifier le signal délivré sous haute impédance par l'accéléromètre 6 et de délivrer un signal en milli-Volt/g.

Le signal de sortie de l'amplificateur 7 est reçu par un générateur 8. Le générateur 8 reçoit un signal de consigne C qui permet d'obtenir le gabarit de vibration désiré. Ce générateur peut être réalisé à titre d'exemple par un générateur 2506 GENRAD ou 1025 Brüelckjaer.

Le niveau de sorti de l'accéléromètre est asservi par le signal issu de l'accéléromètre c'est-à-dire par le signal résultant des vibrations filtrées.

Le signal de sortie du générateur 8 est appliqué à un amplificateur de puissance 9. L'amplificateur de puissance attaque dans le cas d'un vibrateur électrodynamique, la bobine mobile (non représentée) de ce vibrateur 1.

Le filtre est choisi de sorte que sa fréquence de coupure se situe dans une gamme de fréquences pour lesquelles le gabarit demandé correspond à un niveau modéré (petit par rapport aux caractéristiques maximales du vibrateur) où à une baisse d'amplitude commandée par le signal de consigne C.

Le filtre correspond par conséquent à un amortisseur aux fréquences supérieures à sa fréquence de coupure. Ainsi, le signal haute fréquence est amorti par le filtre. La grande dynamique qui est obtenue n'est plus imposée aux éléments de la boucle précités à savoir : générateur, amplificateur de puissance, vibrateur. C'est le filtre qui permet d'obtenir de faibles niveaux aux fréquences élevées et qui de plus supprime les vibrations parasites du vibrateur, se situant généralement au-delà de sa fréquence de coupure. Le filtre permet donc également de linéariser la réponse du vibrateur notamment aux fréquences élevées.

Sur la figure 2, on a représenté un premier exemple de réalisation d'un filtre selon l'invention.

Le filtre selon ce premier mode de réalisation est un filtre mécanique constitué par une pluralité de rondelles. Les rondelles sont en matériau plastique, par exemple en caoutchouc, ou en élastomère.

Le schéma représenté est vu en coupe. Une première rondelle en matériau élastique 10 est placée entre le support 3 et le vibrateur 1. Pour maintenir en place le support 3 sur le vibrateur 1 une perforation 11 a été réalisée dans le support et une perforation 12 a été réalisée dans le vibrateur. Ces perforations se trouvent dans le même axe et sont destinées à recevoir une vis 13.

La tête de la vis repose sur une première rondelle de serrage 14, cette rondelle reposant sur une rondelle 14 en matériau élastique. Les rondelles sont placées dans l'axe des perforations du support et du vibrateur. L'extrémité de la tige de la vis qui est filetée est vissée dans le vibrateur.

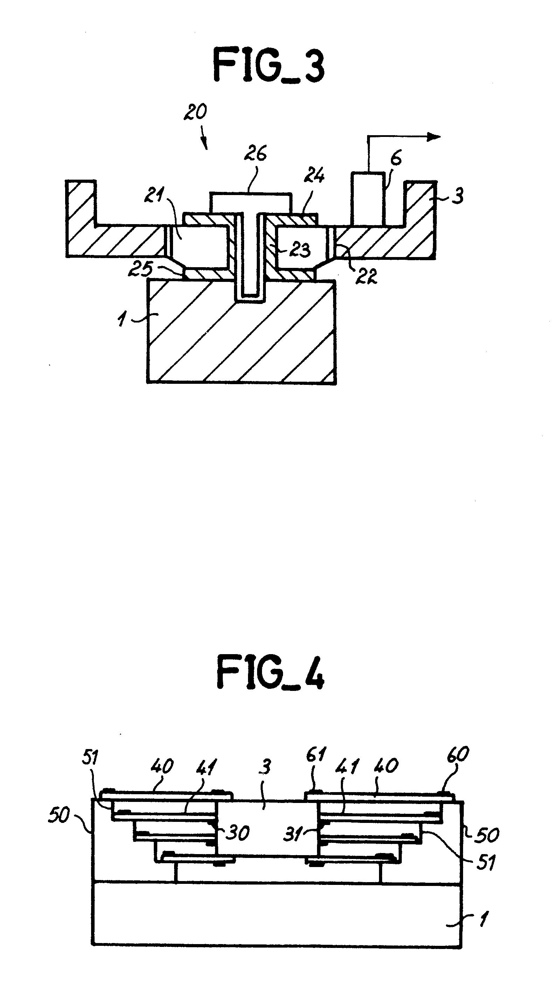

Sur la figure 3, on a représenté un deuxième mode de réalisation du filtre. Le schéma du filtre qui est représenté est vu en coupe.

Selon cet exemple, on rapporte une seule pièce d'amortissement 20 que l'on solidarise au support 3 et au vibrateur 1. La pièce 20 comporte un manchon 21 en matériau élastique pris entre une bague 22 solidaire du support 3 et une bobine 23 solidaire du vibrateur. Le manchon entoure la bobine et est maintenu en place par les deux flasques 24 et 25 de la bobine. La bague 22 est placée autour du manchon.

La pièce est solidaire du vibrateur 1 par une vis 26 dont la tête repose sur les flasques et dont la tige est vissée dans le vibrateur 1.

Sur la figure 4, on a représenté un troisième mode de réalisation du filtre.

Le schéma est représenté selon une vue de côté.

Le filtre comporte une pluralité de lames souples 40, 41... Les lames sont solidaires par une extrémité 61 du support 3. Ces lames sont solidaires par l'autre extrémité 60 d'un support intermédiaire 50. Le support 50 est fixé au support 1. Les lames sont placées préférentiellement sur deux faces opposées du support 3 de manière à porter ce support.

Selon l'exemple qui est représenté on a choisi un support 3 ayant la forme d'un caisson à l'intérieur duquel est placé le circuit à tester et l'accéléromètre 6.

Selon cet exemple, les lames sont disposées de part et d'autre de deux faces opposées 30,31 du caisson. Les lames 40,41 s'étendent entre chacune des faces et l'une des faces 51 du support 50. Des lames sont disposées à des niveaux différents sur chaque face du support 3. Elles sont de longueur différentes. La longueur des lames est décroissante avec le niveau selon lequel elles se trouvent. Les extrémités 61 sont fixées soit à la face 30, soit à la face 31 du support 30.

La face 51 du support 50 comporte un profil en marches d'escalier. L'extrémité 60 de chaque lame est fixée sur la marche d'escalier qui se trouve au même niveau. Une telle disposition permet d'absorber des vibrations transverses.

Bien entendu, on peut placer des lames autour de toutes les faces du support 3 et les répartir de façon à constituer des lignes et des colonnes. On peut également modifier le choix des longueurs et des épaisseurs pour modifier la fréquence de coupure du filtre ainsi constitué, les lames peuvent également être précontraintes simplement en ne disposant pas au même niveau les supports auxquels elles sont attachées.

Les lames peuvent être remplacées par des tendeurs élastiques, le choix de la tension permet d'ajuster la fréquence de coupure du filtre. On peut également utiliser des ressorts ou des barres de torsion ou des câbles.

Les modes de réalisation des filtres qui ont été décrits correspondant à des filtres mécaniques. Bien entendu d'autres types de filtres amortisseurs peuvent être utilisés, par exemple des filtres pneumatiques, hydropneumatiques, électriques, électromécaniques.

On peut modifier la fréquence de coupure d'un filtre amortisseur également en choisissant un matériau qui a un coefficient de raideur plus ou moins élevé selon ce que l'on désire. On peut également modifier la fréquence de coupure en disposant plusieurs filtres de même type entre le vibrateur et le support.

**Revendications**

1. Dispositif de commande d'un vibrateur (1) comprenant une boucle d'asservissement qui comporte des moyens de mesure (5) de contraintes vibratoires de l'ensemble en vibration cet ensemble comprenant un support (3) sur lequel sont placés des circuits à tester (4), la boucle comprenant également un générateur (8) de signal commandé par un signal de consigne pour obtenir un gabatir prédéterminé, ce générateur étant relié aux moyens de mesure, un amplificateur relié au générateur et au vibrateur caractérisé en ce qu'il comporte des moyens de filtrage (2) dont la fréquence de coupure se situe dans une plage de fréquences pour lesquelles le niveau demandé baisse ou est petit par rapport aux caractéristiques maximales du vibrateur et en ce que le niveau de sortie du générateur (8) est asservi par le signal de sortie des moyens de mesure de contrainte (5) ; ces moyens de filtrage (2) étant placés entre le vibrateur et le support (3) des circuits à tester.

2. Dispositif de commande selon la revendication 1 caractérisé en ce que les moyens de filtrages (2) sont constitués par au moins un filtre amortisseur.

3. Dispositif de commande selon la revendication 2 caractérisé en ce que le filtre est un filtre mécanique et en ce qu'il comporte au moins une première rondelle (10) constituée d'un matériau élastique, placée entre le vibrateur (1) et un support (3) sur lequel sont placés les moyens de mesure (5), et au moins un deuxième rondelle (15) constituée d'un matériau élastique, au moins une vis de fixation (13) de support (3) sur le vibrateur (1), la deuxième rondelle (15) étant placée entre la tête de vis et le support.

4. Dispositif de commande selon la revendication 2, caractérisé en ce que le filtre est un filtre mécanique et en ce qu'il comporte une pièce mécanique (20) comprenant des premiers moyens de fixation (22) de la pièce au support (3) sur lequel sont placés les moyens de mesure (5) ; des deuxièmes moyens de fixation (26,23) de la pièce au vibrateur et une pièce (21) constituée d'un matériau élastique prise entre les premier et deuxième moyens de fixation.

5. Dispositif selon la revendication 4, caractérisé en ce que les premiers moyens de fixation sont constitués par une bague (22) et en ce que les deuxièmes moyens de fixation sont constitués par une bobine (23) et une vis (26), la pièce élastique étant placée autour de la bobine et prise entre les flasques (24,25) de la bobine et la bague (22).

6. Dispositif de commande selon la revendication 2 caractérisé en ce que le filtre est un filtre mécanique et en ce qu'il comporte une pluralité d'éléments élastiques (40,41) solidaires, par une extrémité, du support (3) sur lequel sont placés les moyens de mesure (6) et solidaire par l'autre extrémité d'un support intermédiaire (5) qui lui-même est solidaire du vibrateur (1) ; ces éléments sont disposés de manière à porter le support (3) contenant les moyens de mesure (6) et le circuit (4) faisant l'objet des tests.

7. Dispositif de commande selon la revendication 6, caractérisé en ce que les éléments élastiques sont constitués de lames (40,41) s'étendent entre chacune des faces (30,31) externes du support des moyens de mesure et du support intermédiaire (50) et en ce que des lames sont disposées à des niveaux différents de chaque face, des lames ayant des longueurs qui décroissent avec le niveau, le support intermédiaire (50) ayant un profil en marche d'escalier, l'extrémité de chacune les lames reposant sur l'une des marches.

0265309

# FIG_1

# FIG_2

0265309

# FIG_3

# FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 345 862 (R.G. ROWE) <br> * Colonne 3, ligne 22 - colonne 4, ligne 19; figure 1 * <br> --- | 1-3 | B 06 B 1/02 <br> G 01 M 7/00 <br> G 10 K 11/04 |
| Y | US-A-2 753 948 (T. ONGARO) <br> * Colonne 5, lignes 1-18; figure 1 * | 1-3 | |
| A | <br> --- | 4 | |
| Y | PATENT ABSTRACTS OF JAPAN, vol. 6, no. 248 (P-160)[1126], 07-12-1982; & JP-A-57 147 028 (MITSUBISHI JUKOGYO K.K.) 10-09-1982 <br> * En entier * | | |
| A | Idem <br> --- | 1-3 | |
| A | US-A-4 603 587 (D.V. KIMBALL) <br> * Résumé * <br> --- | 6,7 | |
| A | FR-A-2 080 018 (SOCIETE INDUSTRIELLE D'ELECTRONIQUE ET D'INFORMATIQUE) <br> * Page 2, ligne 16 - page 3, ligne 5 * <br> --- | 1 | DOMAINES TECHNIQUES RECHERCHES (Int. Cl.4) |
| A | DE-A-2 221 355 (AKADEMIE DER WISSENSCHAFTEN) <br> --- | 1 | G 01 H <br> B 06 B <br> G 10 K |
| A | FR-A-2 494 015 (MARUKOKEIHOUKI CO., LTD) <br> ----- | | G 01 M <br> H 03 B |

Le présent rapport a été établi pour toutes les revendications

| Lieu de la recherche | Date d'achèvement de la recherche | Examinateur |
|---|---|---|
| LA HAYE | 05-01-1988 | HAASBROEK J.N. |

EPO FORM 1503 03.82 (P0402)